# EUROPEAN PATENT SPECIFICATION

(11) **EP 3 450 495 B1**
(45) Date of publication and mention of the grant of the patent: **05.10.2022**
(21) Application number: 17833935.4
(22) Date of filing: 26.06.2017
(51) Int. Cl.: C08L 23/00, C08K 3/22, C08K 5/14, C08L 23/26

(54) **FLAME-RETARDANT RUBBER COMPOSITION AND EXTERNAL DIAPHRAGM FOR RAILROAD CAR**
FLAMMBESTÄNDIGE KAUTSCHUKZUSAMMENSETZUNG UND EXTERNE MEMBRAN FÜR EINEN EISENBAHNWAGEN
COMPOSITION DE CAOUTCHOUC IGNIFUGE ET DIAPHRAGME EXTERNE POUR VOITURES DE CHEMIN DE FER

(30) Priority: 29.07.2016 JP 2016149393
(43) Date of publication of application: 06.03.2019
(73) Proprietor: Sumitomo Riko Company Limited, Komaki-shi, Aichi 485-8550 (JP)
(72) Inventor: MURATANI, Keiichi, Komaki-shi Aichi 485-8550 (JP); YAMAMOTO, Kenji, Komaki-shi Aichi 485-8550 (JP)
(74) Representative: Müller-Boré & Partner Patentanwälte PartG mbB
(86) International application number: PCT/JP2017/023399
(87) International publication number: WO 2018/020926

(56) References cited:
- EP-A2- 2 343 334
- CN-A- 103 756 223
- JP-A- 2015 021 058
- JP-A- 2016 030 810
- JP-A- 2016 141 766
- KR-Y1- 200 359 142
- US-A1- 2015 159 069

## Description

The present disclosure relates to an external diaphragm for railroad cars obtained using a flame-retardant rubber composition.

An external diaphragm is arranged between railroad cars (in a car connecting portion) mainly for the purposes of, for example, preventing a person from falling off a platform into a space formed between cars of a train, and reducing air resistance of the connecting portion between cars. As such external diaphragm for railroad cars, there is used, for example, a white or gray rubber-made external diaphragm formed of an ethylene-propylene-diene rubber (EPDM) or the like (see, for example, Patent Literature 1).

Incidentally, the external diaphragm for railroad cars has been conventionally required to have flame retardancy, and tends to have strict flame retardancy requirements particularly in some foreign countries. A generally known approach to making a rubber flame-retardant is to add a flame retardant, such as a halogen-based flame retardant, a phosphorus-based flame retardant, or a hydroxide, to the rubber (see, for example, Patent Literatures 2 to 4).
PTL 1: JP-B2-4853485
PTL 2: JP-A-HEI7(1995)-166047
PTL 3: JP-A-2005-146256
PTL 4: JP-A-2009-227695

However, the halogen-based flame retardant has a problem of generating black smoke at the time of its combustion, and a problem of adversely affecting the environment.

Meanwhile, the phosphorus-based flame retardant and the hydroxide do not have such problems as those of the halogen-based flame retardant. However, in order to express their flame retardant effects, the phosphorus-based flame retardant and the hydroxide each need to be added in a large amount into the rubber, thus being liable to serve as a factor in reducing the durability of the rubber. Besides, each of the phosphorus-based flame retardant and the hydroxide has a low interaction with the rubber, and also has a large particle diameter as compared to the particle diameter of silica or carbon black. Accordingly, each of the phosphorus-based flame retardant and the hydroxide is liable to serve as an origin of rubber fracture, and has a risk of serving as a factor in reducing rubber physical properties, such as tensile strength and breaking elongation.

The present disclosure has been made in view of such circumstances, and an object of the present disclosure is to provide an external diaphragm for railroad cars obtained using a flame-retardant rubber composition, the flame-retardant rubber composition being excellent in rubber physical properties, such as tensile strength and breaking elongation, and durability, and being also excellent in flame retardancy.

In order to achieve the above-mentioned object, there is provided an external diaphragm for railroad cars, including a cross-linked product of a flame-retardant rubber composition, wherein the flame-retardant rubber composition includes the following components (A) to (D): (A) an olefin-based rubber; (B) an acid-modified polyolefin; (C) a metal hydroxide; and (D) a cross-linking agent for the component (A). A content of the component (C) with respect to 100 parts by weight of a total content of the component (A) and the component (B) falls within a range of from 100 parts by weight to 350 parts by weight.

That is, the inventors have made extensive investigations in order to solve the above-mentioned problems. During the course of the investigations, the inventors have ascertained that, when an acid-modified polyolefin is added into a rubber composition containing an olefin-based rubber, such as EPDM, as a polymer, and a metal hydroxide as a flame retardant, satisfactory flame retardancy can be expressed even if the blending amount of the metal hydroxide is reduced to fall within a specific range. A possible reason for this is that an acid-modified group in the acid-modified polyolefin has a high bonding property for the metal hydroxide, and the resultant acid-modified polyolefin having bonded thereto the metal hydroxide shows a satisfactory interaction with the olefin-based rubber (in some cases, the acid-modified polyolefin and the olefin-based rubber are co-cross-linked) , with the result that the acid-modified polyolefin shows a coupling action between the olefin-based rubber and the metal hydroxide to enhance the dispersibility of the metal hydroxide in the olefin-based rubber. In addition, the inventors have found that, as a result of the above-mentioned reduction in blending amount of the metal hydroxide, and the above-mentioned coupling action which the acid-modified polyolefin shows while showing excellent flexibility, the rubber composition shows tensile strength, breaking elongation, and the like required of an external diaphragm for railroad cars, and obtains excellent durability. Thus, the inventors have achieved the present disclosure.

As described above, the flame-retardant rubber composition of the present disclosure contains the olefin-based rubber (A), the acid-modified polyolefin (B), the specific amount of the metal hydroxide (C), and the cross-linking agent (D). As a result, the flame-retardant rubber composition of the present disclosure exhibits excellent effects on rubber physical properties, such as tensile strength and breaking elongation, and durability, and also exhibits an excellent effect on flame retardancy. Accordingly, the flame-retardant rubber composition of the present disclosure can exhibit excellent performance particularly as a material for forming a cover, such as the external diaphragm for railroad cars according to the present invention.

In particular, when a content ratio of the olefin-based rubber (A) and the acid-modified polyolefin (B) falls within the range of A/B=95/5 to 70/30 in terms of weight ratio, satisfactory rubber physical properties and durability can be obtained as well as satisfactory dispersibility of the metal hydroxide (C).

In addition, when the cross-linking agent (D) includes an organic peroxide, a problem of yellowing due to acid rain can be eliminated.

In addition, when the olefin-based rubber (A) includes at least one of an ethylene-propylene-diene rubber (EPDM) and chlorosulfonated polyethylene (CSM), the rubber composition is more excellent in durability and the like.

In addition, when the acid-modified polyolefin (B) includes a maleic acid-modified polyolefin, excellent dispersibility of the metal hydroxide is obtained. In particular, when the acid-modified polyolefin (B) includes a maleic acid-modified poly-α-olefin, compatibility with the olefin-based rubber is satisfactory, resulting in more excellent mechanical properties.

In addition, when the metal hydroxide (C) includes at least one of aluminum hydroxide and magnesium hydroxide, a more excellent flame retardant effect can be obtained.

The external diaphragm for railroad cars according to the present invention, including the cross-linked product of the flame-retardant rubber composition of the present disclosure, is excellent in rubber physical properties, such as tensile strength and breaking elongation, and durability, and is also excellent in flame retardancy.

Next, the present disclosure is described in detail.

As described above, a flame-retardant rubber composition of the present disclosure contains an olefin-based rubber (A), an acid-modified polyolefin (B), a specific amount of a metal hydroxide (C), and a cross-linking agent (D). As a result, the flame-retardant rubber composition of the present disclosure exhibits excellent effects on rubber physical properties, such as tensile strength and breaking elongation, and durability, and also exhibits an excellent effect on flame retardancy. Accordingly, the flame-retardant rubber composition of the present disclosure can exhibit excellent performance particularly as a material for forming a cover, such as the external diaphragm for railroad cars according to the present invention. In the present disclosure, the "olefin-based rubber" means a rubber that is a polymer containing an olefin, and that is cross-linkable. As a cross-linkable functional group of the olefin-based rubber, there are given, for example, an active methylene group, methine group, and methyl group each of which is adjacent to an olefinic double bond.

### <<Olefin-based Rubber (Component A)>>

Examples of the olefin-based rubber (A) include ethylene-propylene-based rubbers, such as an ethylene-propylene-diene rubber (EPDM) and an ethylene-propylene copolymer rubber (EPM), chlorosulfonated polyethylene (CSM), a polyisobutylene rubber, a polyisobutyl ether rubber, a polycyclopentene rubber, and a butyl rubber. Those rubbers may be used alone or in combination. Of those, an ethylene-propylene-diene rubber (EPDM) and chlorosulfonated polyethylene (CSM) are suitably used from the viewpoint of being more excellent in durability and the like.

### <<Acid-modified Polyolefin (Component B)>>

Examples of the acid-modified polyolefin (B) include products each obtained by modifying, with an acid, any of polyolefin resins (excluding the olefin-based rubber (A)), such as a poly-α-olefin, high-density polyethylene (HDPE), polyethylene, polypropylene, polybutene, and polymethylpentene. Those acid-modified polyolefins may be used alone or in combination. The modification with an acid may be performed with, for example, an unsaturated carboxylic acid, polylactic acid, phosphoric acid, or a sulfonic acid. In addition, examples of the unsaturated carboxylic acid include acrylic acid, methacrylic acid, maleic acid, maleic anhydride, itaconic acid, itaconic anhydride, fumaric acid, crotonic acid, a half ester of an unsaturated dicarboxylic acid, a half amide of an unsaturated dicarboxylic acid, phthalic acid, cinnamic acid, glutaconicacid, citraconic anhydride, aconitic anhydride, and nadic acid. In addition, a modified group obtained through the modification with an acid may be arranged ona terminal of a polyolefin molecular chain or in the middle of the molecular chain (molecular chain nonterminal).

Of those, the acid-modifiedpolyolefin (B) is preferably a maleic acid-modified polyolefin from the viewpoint of the dispersibility of the metal hydroxide, and is more preferably a maleic acid-modified poly-α-olefin from the same viewpoint.

Inaddition, the content ratio of the olefin-based rubber (A) and the acid-modified polyolefin (B) falls within preferably the range of A/B=95/5 to 70/30, more preferably the range of A/B=95/5 to 80/20 in terms of weight ratio. That is, when such content ratio is adopted, satisfactory rubber physical properties and durability can be obtained as well as satisfactory dispersibility of the metal hydroxide (C).

### <<Metal Hydroxide (Component C)>>

At least one of aluminum hydroxide and magnesium hydroxide is preferably used as the metal hydroxide (C) because a more excellent flame retardant effect can be obtained.

In addition, the content of the metal hydroxide (C) is required to fall within the range of from 100 parts by weight to 350 parts by weight with respect to 100 parts by weight of the total content of the olefin-based rubber (A) and the acid-modified polyolefin (B), and falls within the range of preferably from 150 parts by weight to 300 parts by weight, more preferably from 150 parts by weight to 250 parts by weight. That is, such range is adopted for the following reasons: when the content of the metal hydroxide (C) is lower than the range, a desired flame retardant effect cannot be obtained; and when the content of the metal hydroxide (C) is higher than the range, processability is deteriorated and mechanical strength is deteriorated.

### <<Cross-linking Agent (Component D)>>

Depending on the kind of the olefin-based rubber (A) to be used, a cross-linking agent capable of cross-linking the olefin-based rubber is used as the cross-linking agent (D). In addition, examples of the cross-linking agent (D) include: sulfur-based cross-linking agents, such as sulfur and sulfur chloride; and organic peroxides, such as 2,4-dichlorobenzoyl peroxide, benzoyl peroxide, 1,1-di-t-butylperoxy-3,3,5-trimethylcyclohexane, 2,5-dimethyl-2,5-dibenzoylperoxyhexane, n-butyl-4,4'-di-t-butylperoxyvalerate, dicumyl peroxide, t-butylperoxy benzoate, di-t-butylperoxy-diisopropylbenzene, t-butyl cumyl peroxide, 2, 5-dimethyl-2, 5-di (t-butylperoxy) hexane, di-t-butyl peroxide, 2,5-dimethyl-2,5-di-t-butylperoxy hexyne-3, and 1,3-bis-(t-butylperoxy-isopropyl)benzene. Those cross-linking agents (D) may be used alone or in combination. Of those, an organic peroxide is preferred as the cross-linking agent (D) because a problem of yellowing due to acid rain can be eliminated, and hence the rubber composition can exhibit excellent performance as a material for forming a cover, such as the external diaphragm for railroad cars according to the present invention.

The content of the cross-linking agent (D) falls within preferably the range of from 0.5 part by weight to 15 parts by weight, more preferably the range of from 0.5 part by weight to 10 parts by weight with respect to 100 parts by weight of the total content of the olefin-based rubber (A) and the acid-modified polyolefin (B). That is, such range is adopted because of the following reasons: when the content of the cross-linking agent (D) is excessively low, there is observed such a tendency that tensile strength is reduced; and when the content of the cross-linking agent (D) is excessively high, there is observed such a tendency that scorch resistance is deteriorated and elongation is reduced.

As required, a reinforcing agent (e.g., carbon black, silica, or talc), a vulcanization accelerator, a vulcanization aid, a co-cross-linking agent, an anti-aging agent, a process oil, and the like may be appropriately blended into the flame-retardant rubber composition of the present disclosure in addition to the components (A) to (D).

The flame-retardant rubber composition of the present disclosure may be prepared, for example, in the following manner. That is, the olefin-based rubber (A), the acid-modified polyolefin (B), the specific amount of the metal hydroxide (C), and as required, the reinforcing agent, the anti-aging agent, the process oil, and the like are appropriately blended. With the use of a Banbury mixer or the like, kneading of those components is started at a temperature of about 50°C, followed by kneading at from 100°C to 160°C for from about 3 minutes to about 5 minutes. Next, the kneaded product is appropriately blended with the cross-linking agent (D), the co-cross-linking agent, the vulcanization accelerator, the vulcanization aid, and the like, followed by kneading using an open roll under predetermined conditions (e.g., 60°C×5 minutes). Thus, the flame-retardant rubber composition may be prepared. After that, the resultant flame-retardant rubber composition may be cross-linked at a high temperature (of from 150°C to 170°C) for from 5 minutes to 60 minutes to provide a flame-retardant rubber (cross-linked product) .

The flame-retardant rubber composition of the present disclosure can exhibit excellent performance particularly as a material for forming a cover, such as the external diaphragm for railroad cars according to the present invention. The external diaphragm for railroad cars according to the present invention, including a cross-linked product of the flame-retardant rubber composition of the present disclosure, is excellent in rubber physical properties, such as tensile strength and breaking elongation, and durability, and is also excellent in flame retardancy.

### EXAMPLES

Next, Examples are described together with Comparative Examples. However, the present disclosure is not limited to these Examples.

First, prior to Examples and Comparative Examples, the following materials were prepared.
[EPDM (Component (A))]
   ESPRENE 512F, manufactured by Sumitomo Chemical Co., Ltd.
[Acid-modified Polyolefin (Component (B))]
   TAFMER MH7020, manufactured by Mitsui Chemicals, Inc.
[Polyolefin]
   TAFMER DF740, manufactured by Mitsui Chemicals, Inc.
[Zinc Oxide]
   Zinc Oxide No . 2 , manufactured by Sakai Chemical Industry Co., Ltd.
[Stearic Acid]
   Stearic acid "Sakura", manufactured by NOF Corporation
[Aluminum Hydroxide (Component (C))]
   HIGILITE H-42M, manufactured by Showa Denko K.K.
[Magnesium Hydroxide (Component (C))]
   KISUMA 5, manufactured by Kyowa Chemical Industry Co., Ltd.
[Peroxide Cross-linking Agent (Component (D))]
   Percumyl D-40, manufactured by NOF Corporation
[Co-cross-linking Agent]
   Hi-Cross ED-P, manufactured by Seiko Chemical Co., Ltd.
[Sulfur]
   Sulfur, manufactured by Karuizawa Refinery
[Vulcanization Accelerator-1]
   SANCELER BZ, manufactured by Sanshin Chemical Industry Co., Ltd.
[Vulcanization Accelerator-2]
   SANCELER TT, manufactured by Sanshin Chemical Industry Co., Ltd.
[Vulcanization Accelerator-3]
   SANCELER TRA, manufactured by Sanshin Chemical Industry Co. , Ltd.
[Vulcanization Accelerator-4]
   VULNOC R, manufactured by Ouchi Shinko Chemical Industrial Co., Ltd.

### <Examples 1 to 10 and Comparative Examples 1 to 4>

Components shown in Table 1 and Table 2 below were blended at ratios shown in Table 1 and Table 2, and were kneaded using a Banbury mixer and an open roll to prepare rubber compositions.

The evaluations of respective properties were performed by using the rubber compositions of Examples and Comparative Examples thus obtained in accordance with the following criteria. The results are also shown in Table 1 and Table 2 below.

### [Processability]

The Mooney viscosity of each of the rubber compositions (kneaded products) was measured at a test temperature of 121°C in conformity with JIS K6300-1 (2001). Then, a case in which the Mooney viscosity (ML₁₊₄ 121°C) was less than 70 was indicated by "∘∘", a case in which the Mooney viscosity was 70 or more and less than 100 was indicated by "∘", and a case in which the Mooney viscosity was 100 or more was indicated by "×".

### [Tensile Strength and Breaking Elongation]

Each of the rubber compositions was subjected to press molding (vulcanized) under the conditions of 150°C×20 minutes to produce a rubber sheet having a thickness of 2 mm. Then, a JIS No. 5 dumbbell was punched out of the rubber sheet, and its tensile strength and elongation at break (breaking elongation) were measured in conformity with JIS K6251 (2010). A case in which the tensile strength was 10 MPa or more was indicated by "∘∘", a case in which the tensile strength was 7 MPa or more and less than 10 MPa was indicated by "∘", and a case in which the tensile strength was less than 7 MPa was indicated by "×" . In addition, a case in which the breaking elongation was 600% or more was indicated by "∘∘", a case in which the breaking elongation was 500% or more and less than 600% was indicated by "∘", and a case in which the breaking elongation was less than 500% was indicated by "×" .

### [Dumbbell Fatigue Test]

Each of the rubber compositions was subjected to press molding (vulcanized) under the conditions of 150°C×20 minutes to produce a rubber sheet having a thickness of 2 mm. Then, a JIS No. 3 dumbbell was punched out of the rubber sheet, and a dumbbell fatigue test (elongation test) was performed by using the dumbbell in conformity with JIS K6260. Then, such a dumbbell that the number of times of elongation at the time of its breaking (number of times at the time of the breaking) was 50,000 or more was indicated by "∘∘", such a dumbbell that the number of times at the time of the breaking was 10,000 or more and less than 50,000 was indicated by "∘", and such a dumbbell that the number of times at the time of the breaking was less than 10,000 was indicated by "×" .

### [Light Permeability Test]

Each of the flame-retardant rubber compositions was subjected to press molding (vulcanized) under the conditions of 150°C×60 minutes to produce a 76.2-millimeter square rubber block having a thickness of 25.4 mm. Then, in order for the flame retardancy of the rubber block to be evaluated, the light permeability of smoke produced at the time of the combustion of the rubber block was measured in conformity with ASTM E662. That is, such a rubber block that the Ds value (specific optical density) of the smoke 4 minutes after the initiation of heating in a non-flaming or flaming test was less than 50 was indicated by "∘∘", such a rubber block that the Ds value was 50 or more and less than 200 was indicated by "∘", and such a rubber block that the Ds value was 200 or more was indicated by "×".

### [Oxygen Index]

Each of the flame-retardant rubber compositions was subjected to press molding (vulcanized) under the conditions of 150°C×20 minutes to produce a rubber sheet having a thickness of 2 mm. Then, in order to evaluate how burnable the rubber sheet was, the lowest oxygen concentration (vol. %) required for sustaining the combustion of the rubber sheet was measured in conformity with JIS K7201. Then, a case in which the oxygen index was 24 or more was indicated by "∘∘", a case in which the oxygen index was 21 or more and less than 24 was indicated by "∘", and a case in which the oxygen index was less than 21 was indicated by "×" .

**Table 1**

| (part (s) by weight) | | | | | | | | | | |
|---|---|---|---|---|---|---|---|---|---|---|
| | Example | | | | | | | | | |
| | 1 | 2 | 3 | 4 | 5 | 6 | 7 | 8 | 9 | 10 |
| EPDM | 95.0 | 95.0 | 95.0 | 95.0 | 95.0 | 95.0 | 90.0 | 80.0 | 70.0 | 95.0 |
| Acid-modified polyolefin | 5.0 | 5.0 | 5.0 | 5.0 | 5.0 | 5.0 | 10.0 | 20.0 | 30.0 | 5.0 |
| Polyolefin | - | - | - | - | - | - | - | - | - | - |
| Zinc oxide | 5.0 | 5.0 | 5.0 | 5.0 | 5.0 | 5.0 | 5.0 | 5.0 | 5.0 | 5.0 |
| Stearic acid | 2.0 | 2.0 | 2.0 | 2.0 | 2.0 | 2.0 | 2.0 | 2.0 | 2.0 | 2.0 |
| Aluminum hydroxide | 100.0 | 200.0 | 250.0 | 300.0 | 350.0 | - | 200.0 | 200.0 | 200.0 | 200.0 |
| Magnesium hydroxide | - | - | - | - | - | 250.0 | - | - | - | - |
| Peroxide cross-linking agent | 4.0 | 4.0 | 4.0 | 4.0 | 4.0 | 4.0 | 4.0 | 4.0 | 4.0 | - |
| Co-cross-linking agent | 5.0 | 5.0 | 5.0 | 5.0 | 5.0 | 5.0 | 5.0 | 5.0 | 5.0 | - |
| Sulfur | - | - | - | - | - | - | - | - | - | 0.6 |
| Vulcanization accelerator-1 | - | - | - | - | - | - | - | - | - | 0.5 |
| Vulcanization accelerator-2 | - | - | - | - | - | - | - | - | - | 0.5 |
| Vulcanization accelerator-3 | - | - | - | - | - | - | - | - | - | 1.5 |
| Vulcanization accelerator-4 | - | - | - | - | - | - | - | - | - | 1.7 |
| Processability | ∘∘ | ∘∘ | ∘∘ | ∘ | ∘ | ∘∘ | ∘∘ | ∘ | ∘ | ∘∘ |
| Tensile strength | ∘∘ | ∘∘ | ∘∘ | ∘ | ∘ | ∘∘ | ∘∘ | ∘∘ | ∘∘ | ∘ |
| Breaking elongation | ∘∘ | ∘∘ | ∘∘ | ∘ | ∘ | ∘∘ | ∘ | ∘ | ∘ | ∘ |
| Dumbbell fatigue test | ∘∘ | ∘∘ | ∘∘ | ∘ | ∘ | ∘∘ | ∘ | ∘ | ∘ | ∘ |
| Light permeability test | ∘ | ∘∘ | ∘∘ | ∘∘ | ∘∘ | ∘∘ | ∘∘ | ∘∘ | ∘∘ | ∘∘ |
| Oxygen index | ∘ | ∘∘ | ∘∘ | ∘∘ | ∘∘ | ∘∘ | ∘∘ | ∘∘ | ∘∘ | ∘∘ |

**Table 2**

| (part(s) by weight) | | | | |
|---|---|---|---|---|
| | Comparative Example | | | |
| | 1 | 2 | 3 | 4 |
| EPDM | 100.0 | 95.0 | 95.0 | 95.0 |
| Acid-modified polyolefin | - | - | 5.0 | 5.0 |
| Polyolefin | - | 5.0 | - | - |
| Zinc oxide | 5.0 | 5.0 | 5.0 | 5.0 |
| Stearic acid | 2.0 | 2.0 | 2.0 | 2.0 |
| Aluminum hydroxide | 200.0 | 200.0 | 80.0 | 400.0 |
| Magnesium hydroxide | - | - | - | - |
| Peroxide cross-linking agent | 4.0 | 4.0 | 4.0 | 4.0 |
| Co-cross-linking agent | 5.0 | 5.0 | 5.0 | 5.0 |
| Sulfur | - | - | - | - |
| Vulcanization accelerator-1 | - | - | - | - |
| Vulcanization accelerator-2 | - | - | - | - |
| Vulcanization accelerator-3 | - | - | - | - |
| Vulcanization accelerator-4 | - | - | - | - |
| Processability | ∘ | ∘∘ | ∘∘ | × |
| Tensile strength | × | × | ∘∘ | × |
| Breaking elongation | ∘ | ∘ | ∘∘ | × |
| Dumbbell fatigue test | ∘ | ∘ | ∘∘ | × |
| Light permeability test | ∘∘ | ∘ | × | ∘∘ |
| Oxygen index | ∘∘ | ∘ | × | ∘∘ |

It is found from the results shown in Table 1 that the rubber compositions of Examples are excellent in processability at the time of kneading, and rubber physical properties, such as tensile strength and breaking elongation, and also excellent in durability (dumbbell fatigue test), and have received high evaluations in the flame retardancy evaluations (light permeability test and oxygen index).

In contrast, the rubber compositions of Comparative Example 1 and Comparative Example 2, in each of which the acid-modified polyolefin (component (B)) was not blended, provided inferior results in tensile strength to those of Examples. The rubber composition of Comparative Example 3, in which the content of the metal hydroxide (component (C)) was excessively low, provided inferior results in flame retardant effect to those of Examples. The rubber composition of Comparative Example 4, in which the content of the metal hydroxide (component (C)) was excessively high, was deteriorated in processability, and was also deteriorated in mechanical strength (tensile strength, breaking elongation, and dumbbell fatigue test).

The flame-retardant rubber composition of the present disclosure exhibits excellent effects on rubber physical properties, such as tensile strength and breaking elongation, and durability, and also exhibits an excellent effect on flame retardancy. Accordingly, the flame-retardant rubber composition of the present disclosure can exhibit excellent performance particularly as a material for forming a cover, such as the external diaphragm for railroad cars according to the present invention.

## Claims

1. An external diaphragm for railroad cars, comprising:
a cross-linked product of a flame-retardant rubber composition, the flame-retardant rubber composition comprising:
(A) an olefin-based rubber;
(B) an acid-modified polyolefin;
(C) a metal hydroxide; and
(D) a cross-linking agent for the component (A),
wherein a content of the component (C) with respect to 100 parts by weight of a total content of the component (A) and the component (B) falls within a range of from 100 parts by weight to 350 parts by weight.

2. The external diaphragm for railroad cars according to claim 1, wherein a content ratio of the olefin-based rubber (A) and the acid-modified polyolefin (B) falls within a range of A/B=95/5 to 70/30 in terms of weight ratio.

3. The external diaphragm for railroad cars according to claim 1 or 2, wherein the cross-linking agent (D) comprises an organic peroxide.

4. The external diaphragm for railroad cars according to any one of claims 1 to 3, wherein the olefin-based rubber (A) comprises at least one of an ethylene-propylene-diene rubber (EPDM) and chlorosulfonated polyethylene (CSM).

5. The external diaphragm for railroad cars according to any one of claims 1 to 4, wherein the acid-modified polyolefin (B) comprises a maleic acid-modified polyolefin.

6. The external diaphragm for railroad cars according to claim 5, wherein the maleic acid-modified polyolefin comprises a maleic acid-modified poly-α-olefin.

7. The external diaphragm for railroad cars according to any one of claims 1 to 6, wherein the metal hydroxide (C) comprises at least one of aluminum hydroxide and magnesium hydroxide.

## Patentansprüche

1. Externe Scheidewand für Eisenbahnwaggons, umfassend:
ein vernetztes Produkt einer flammenhemmenden Kautschukzusammensetzung, wobei die flammenhemmende Kautschukzusammensetzung umfasst:
(A) ein Kautschuk auf Olefinbasis;
(B) ein säuremodifiziertes Polyolefin;
(C) ein Metallhydroxid; und
(D) ein Vernetzungsmittel für die Komponente (A),
wobei ein Gehalt der Komponente (C), bezogen auf 100 Gewichtsteile eines Gesamtgehalts der Komponente (A) und der Komponente (B), in einem Bereich von 100 Gewichtsteilen bis 350 Gewichtsteilen liegt.

2. Externe Scheidewand für Eisenbahnwaggons nach Anspruch 1, wobei ein Gehaltsverhältnis des Kautschuks auf Olefinbasis (A) und des säuremodifizierten Polyolefins (B) in einem Bereich von A/B=95/5 bis 70/30 in Bezug auf ein Gewichtsverhältnis liegt.

3. Externe Scheidewand für Eisenbahnwaggons nach Anspruch 1 oder 2, wobei das Vernetzungsmittel (D) ein organisches Peroxid umfasst.

4. Externe Scheidewand für Eisenbahnwaggons nach einem der Ansprüche 1 bis 3, wobei der Kautschuk auf Olefinbasis (A) mindestens eines von einem Ethylen-Propylen-Dien-Kautschuk (EPDM) und chlorsulfoniertem Polyethylen (CSM) umfasst.

5. Externe Scheidewand für Eisenbahnwaggons nach einem der Ansprüche 1 bis 4, wobei das säuremodifizierte Polyolefin (B) ein Polyolefin, welches mit Maleinsäure modifiziert ist, umfasst.

6. Externe Scheidewand für Eisenbahnwaggons nach Anspruch 5, wobei das Polyolefin, welches mit Maleinsäure modifiziert ist, ein Poly-α-olefin, welches mit Maleinsäure modifiziert ist, umfasst.

7. Externe Scheidewand für Eisenbahnwaggons nach einem der Ansprüche 1 bis 6, wobei das Metallhydroxid (C) mindestens eines von Aluminiumhydroxid und Magnesiumhydroxid umfasst.

## Revendications

1. Soufflet externe pour wagons, comprenant :
un produit réticulé d'une composition de caoutchouc ignifuge, la composition de caoutchouc ignifuge comprenant :
(A) un caoutchouc à base d'oléfine ;
(B) une polyoléfine modifiée par un acide ;
(C) un hydroxyde métallique ; et
(D) un agent de réticulation pour le composant (A),
dans lequel une teneur en le composant (C) par rapport à 100 parties en poids d'une teneur totale en le composant (A) et le composant (B) tombe au sein d'une plage allant de 100 parties en poids à 350 parties en poids.

2. Soufflet externe pour wagons selon la revendication 1, dans lequel un rapport de teneurs du caoutchouc à base d'oléfine (A) et de la polyoléfine modifiée par un acide (B) tombe au sein d'une plage de A/B=95/5 à 70/30 en termes de rapport pondéral.

3. Soufflet externe pour wagons selon la revendication 1 ou 2, dans lequel l'agent de réticulation (D) comprend un peroxyde organique.

4. Soufflet externe pour wagons selon l'une quelconque des revendications 1 à 3, dans lequel le caoutchouc à base d'oléfine (A) comprend au moins un d'un caoutchouc d'éthylène-propylène-diène (EPDM) et du polyéthylène chlorosulfoné (CSM).

5. Soufflet externe pour wagons selon l'une quelconque des revendications 1 à 4, dans lequel la polyoléfine modifiée par un acide (B) comprend une polyoléfine modifiée par de l'acide maléique.

6. Soufflet externe pour wagons selon la revendication 5, dans lequel la polyoléfine modifiée par de l'acide maléique comprend une poly-α-oléfine modifiée par de l'acide maléique.

7. Soufflet externe pour wagons selon l'une quelconque des revendications 1 à 6, dans lequel l'hydroxyde métallique (C) comprend au moins un de l'hydroxyde d'aluminium et de l'hydroxyde de magnésium.
